# EUROPÄISCHE PATENTSCHRIFT

(11) **EP 3 265 729 B1**
(45) Veröffentlichungstag und Bekanntmachung des Hinweises auf die Patenterteilung: **07.10.2020**
(21) Anmeldenummer: 15709875.7
(22) Anmeldetag: 04.03.2015
(51) Int. Cl.: F24T 10/15, E21B 47/00

(54) **VERFAHREN ZUR ERFASSUNG ORTSABHÄNGIGER ZUSTANDSGRÖSSEN IN ROHRLEITUNGEN, UND ERDWÄRMESONDE**
METHOD FOR SENSING LOCATION-DEPENDENT STATE VARIABLES IN PIPELINES, AND GEOTHERMAL PROBE
PROCÉDÉ DE DÉTECTION DE GRANDEURS D'ÉTAT DÉPENDANT DU LIEU DANS DES CONDUITES, ET SONDE GÉOTHERMIQUE

(43) Veröffentlichungstag der Anmeldung: 10.01.2018
(73) Patentinhaber: Enoware GmbH, 76131 Karlsruhe (DE)
(72) Erfinder: FRIDERICH, Jens, 76131 Karlsruhe (DE); LINDER , Karl, G., 76131 Karlsruhe (DE); NEUMAIER, Tim, 76139 Karlsruhe (DE); ZORN, Roman, 75015 Bretten (DE); KARELIN, Viktor, 76448 Durmersheim (DE); MEIER, Simeon, 76351 Linkenheim-Hochstetten (DE); TOMASETTI, Falco, 76137 Karlsruhe (DE)
(74) Vertreter: Hamel, Armin
(86) Internationale Anmeldenummer: PCT/EP2015/054549
(87) Internationale Veröffentlichungsnummer: WO 2016/138955

(56) Entgegenhaltungen:
- WO-A1-2007/020475
- WO-A2-2014/118254
- DE-A1- 2 405 822
- DE-A1- 10 161 401
- DE-A1-102009 047 405
- DE-C1- 3 227 708
- DE-T2- 69 930 934
- US-A- 3 224 247
- US-A1- 2008 204 008
- US-A1- 2011 125 451
- US-A1- 2011 282 619

## Beschreibung

Die Erfindung betrifft ein Verfahren zur Erfassung ortsabhängiger Zustandsgrößen in Rohrleitungen mittels mindestens einer drahtlosen Messsonde.

Außerdem betrifft die Erfindung eine Erdwärmsonde umfassend einen Rohrleitungskreis mit einer drahtlosen Messsonde zum Messen physikalischer Größen in mindestens einem Abschnitt des Rohrleitungskreises und mit einer Umwälzpumpe zum Umwälzen eines im Rohrleitungskreis befindlichen flüssigen Mediums.

Ein derartiges Verfahren, von dem die vorliegende Erfindung ausgeht, ist aus der Schrift DE 699 30 934.4 T2 bekannt. Das bekannte Verfahren umfasst die Schritte: - Bereitstellen einer oder mehrerer Erfassungsvorrichtung/en, wobei jede Vorrichtung Sensoren zum Messen physikalischer Zustandsgrößen, einen Datenprozessor zum Verarbeiten der gemessenen Werte und ein Schutzgehäuse umfasst, welches die Sensoren und den Datenprozessor enthält, wobei das Gehäuse einen geringeren durchschnittlichen Außendurchmesser als der durchschnittliche Innendurchmesser einer Leitung, in der Messungen vorgenommen werden sollen, aufweist, so daß das Fluid in der Leitung um die Erfassungsvorrichtung herum strömt; - Einsetzen der Erfassungsvorrichtung in die Leitung; - Aktivieren der Sensoren und des Datenprozessors von zumindest einer eingesetzten Erfassungsvorrichtung, um physikalische Zustandsgrößen in der Leitung zu messen und zu verarbeiten; - Freisetzen von zumindest einer Erfassungsvorrichtung, deren Sensoren und Datenprozessor in der Leitung aktiviert sind oder wurden; - Zulassen, dass jede freigesetzte Erfassungsvorrichtung sich über eine gewählte Längendistanz durch die Leitung bewegt; und - Übertragen der durch den Datenprozessor verarbeiteten Werte an ein Datenerfassungssystem außerhalb der Leitung.

Das Gehäuse ist sowohl robust als auch kompakt, so dass die Erfassungsvorrichtung in der Lage ist, sich über eine lange Distanz durch die Leitung zu bewegen, und klein im Verhältnis zu dem Innendurchmesser der Leitung ist, so dass sie die Strömung durch die Leitung nicht behindert.

Die bei diesem bekannten Verfahren benutzten Erfassungsvorrichtungen, d.h. Messsonden, bestehen aus einem kugelförmigen Schutzgehäuse mit einem Außendurchmesser von weniger als 15 cm, wobei das Gehäuse Sensoren zum Messen physikalischer Daten in einem Schacht und einen Datenprozessor enthält, wobei die Sensoren und der Datenprozessor einen Teil eines mikroelektromechanischen Systems mit integrierter Sensorik bilden; ein Navigationsteil; einen Energieteil; eine Komponente, die aus der Gruppe einer Datenspeichereinheit und einer Datenübertragungseinheit gewählt ist; und zumindest eine um den Umfang gewickelte, elektrisch leitende Drahtschleife, die als eine Radiofrequenz- oder induktive Antennenschleife zur Kommunikation und als ein induktives Ladegerät für das Energieteil der Vorrichtung dient.

Nachteilig an dieser vorgeschlagenen Lösung ist, dass keine kontinuierliche Erfassung der ortabhängigen Zustandsgrößen, die sich zeitabhängig ändern können, möglich ist.

Diesen Nachteil weist auch das aus der EP 1 600 749 B1 bekannte Verfahren auf, bei dem zur Messung der Temperatur oder anderen geophysikalischer Größen mit einer kabellosen Bohrlochsonde in einem mit Flüssigkeit, insbesondere Wasser, gefüllten, U-förmigen Erdwärmesonden gemessen wird. In einem druckfesten Gehäuse sind wenigstens ein Sensor zur Messwerterfassung, insbesondere ein Temperatursensor, wenigstens ein Drucksensor, ein Zeitgeber, wenigstens ein Datenspeicher sowie eine internen Stromversorgung darin angeordnet. Eine Ausspülanordnung mit einer Auffangvorrichtung dient zum Auffangen der Bohrlochsonde beim Ausspülen. Auch diese Messanordnung erlaubt folglich keine kontinuierliche Messung.

Zur Vermeidung dieses Nachteils wird in der DE 10 2007 048 978 A1 der Einsatz eines faseroptischen Temperatursensorkabels vorgeschlagen. Der Grundgedanke dieses vorbekannten Verfahrens besteht somit darin, vollkommen auf die Methode der faseroptischen Temperaturmessung zurückzugreifen. Dieses Verfahren wird beispielsweise bei einer in den Untergrund eingebrachten Erdwärmesonde angewandt. Durch eine jeweils zweckmäßige Veränderung des Messregimes ist die Bestimmung sämtlicher Funktionsparameter der Erdwärmenutzungsanordnung auf eine faseroptische Temperaturmessung entlang der Erdwärmesonde zurück zu führen. Dies wird insbesondere dadurch ermöglicht, indem die faseroptische Temperaturmessung zeit- und ortsaufgelöst erfolgt. Die Ortsauflösung der Temperaturmessung ergibt sich durch die Messkonfiguration des faseroptischen Verfahrens von vornherein, da bekanntermaßen bei diesem Verfahren die aus unterschiedlichen Punkten des faseroptischen Lichtleiters rückgestreuten Lichtintensitäten ausgewertet werden. Die Zeitauflösung ergibt sich durch wiederholte faseroptische Temperaturmessungen in bestimmten Zeitabständen.

Nachteilig an dieser Lösung ist, dass man auf die Temperaturermittlung beschränkt ist. Der Einbau und die Kalibrierung eines solchen Kabels sind sehr aufwendig. Das Kabel ist teuer und kann in vielen Fällen nicht ausgetauscht werden.

Weiterhin ist aus US 2011/0282691 A1 ein Verfahren zur Erfassung ortsabhängiger Zustandsgrößen in Rohrleitungen mittels mindestens einer drahtlosen Messsonde in mindestens einem Abschnitt eines Rohrleitungssystems bekannt. Das im Rohrleitungssystem befindliche flüssige Medium wird mittels einer Pumpe umgewälzt und die mindestens eine Messsonde über eine Umleitung an der Pumpe vorbeigeleitet.

Die Messsonde ist allerdings nur schwer zugänglich und kann daher schlecht aus dem System entnommen, eingesetzt oder ausgetauscht werden.

Es besteht somit ein dringendes Bedürfnis an einem Verfahren und einer Vorrichtung für die kontinuierliche Überwachung von ortsabhängigen Zustandsgrößen in Rohrleitungen, bei der eine Messsonde einfach entnommen, eingesetzt oder ausgetauscht werden kann.

Diese Aufgabe wird durch die Merkmale der Patentansprüche 1 und 4 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.
[A1] Bei einem Verfahren zur Erfassung ortsabhängiger Zustandsgrößen in Rohrleitungen mittels mindestens einer drahtlosen Messsonde in mindestens einem Abschnitt eines Rohrleitungssystems einer Erdwärmesonde, wird die Aufgabe dadurch gelöst, dass das im Rohrleitungssystem befindliche flüssige Medium mittels einer Pumpe umgewälzt wird, und die mindestens eine Messsonde über einen Bypass an der Umwälzpumpe vorbeigeleitet in einem Kreis geführt wird. Die Messsonde passiert durch die Führung im Kreis immer wieder den zu vermessenden Rohrleitungsabschnitt. Deshalb handelt es sich um eine quasi kontinuierliche Überwachung des Rohrleitungsabschnitts. Die Zeitauflösung dieser Überwachung entspricht der Umlaufzeit der Sonde. Die Sonde kann dabei mehrere physikalische Größen gleichzeitig überwachen. Zu diesem Zweck müssen dann entsprechende Sensoren in der Messsonde vorgesehen sein. Es ist aber alternativ auch möglich, mehrere auf eine Größe spezialisierte Sonden umlaufen zu lassen. Damit beim normalen Betrieb des Rohrleitungssytems die Messsonden ein- und ausgeschleust werden können ist eine Schleusenkammer mit mindestens einer zusätzlichen verschließbaren Beschickungsöffnung und/oder Entnahmeöffnung vorgesehen. Dadurch sind die Messsonden in der Schleusenkammer zugänglich und können aus dieser entnommen oder getauscht oder eingesetzt werden, wobei vorteilhaft ist, dass die Erdwärmesonde ohne Unterbrechung weiter betrieben werden kann. Damit das System nicht wie im Stand der Technik für das Ein- und Ausschleusen einer Sonde extra geöffnet werden muss, ist vorgesehen, dass der Bypass drei miteinander mittels beweglicher in Trennwänden vorgesehener Verschlüsse schaltbar verbundene Kammern aufweist, wovon eine Vorlaufkammer von der Flüssigkeit auf der Vorlaufseite und eine Rücklaufkammer auf der Rücklaufseite des Rohrleitungssystems durchflossen wird, und zwischen diesen Kammern eine Schleusenkammer angeordnet ist. Die Aufteilung des Bypasses in drei Kammern, erlaubt es, die zwischen zwei benachbarten Kammern vorgesehenen Öffnungen mittels beweglicher Klappen willkürlich zu öffnen oder zu schließen und so den Rücklauf vom Vorlauf zu trennen, auch wenn die Messsonde von einer in die nächste Kammer übertritt. Die Schaltung dieser Kammer erfolgt nach dem Schleusenprinzip. Die mittlere Kammer stellt dabei die Schleuse dar, deren Öffnungen zum Vorlauf oder Rücklauf wechselseitig geöffnet und geschlossen werden, um die Messsonde passieren zu lassen. Dadurch, dass die Schleusenkammer mindestens eine zusätzliche verschließbare Beschickungsöffnung und/oder Entnahmeöffnung aufweist, können Messsonden beim normalen Betrieb des Rohrleitungssystems der Erdwärmesonde in den Kreislauf ein- und ausgeschleust werden.
[A2] In Ausgestaltung des Verfahrens ist vorgesehen, dass die mindestens eine Messsonde während ihres Umlaufs im Rohrleitungssystem vorrübergehend angehalten wird. Dieser Aufenthalt wird mit Vorteil dazu genutzt, um induktiv der Sonde Energie zuzuführen oder Daten auszulesen.
[A3] Wenn die Umwälzpumpe für eine Messdauer vorrübergehend angehalten wird, können die Zustandsgrößen der Flüssigkeit im Ruhezustand ermittelt werden. Die Sonde, die vorteilhafter weise eine Dichte aufweist, die größer als die der Flüssigkeit, sinkt in vertikalen Rohleitungsabschnitt der Schwerkraft folgend nach unten. Bei Erdwärmesonden kann so das Temperaturprofil als Funktion des statischen Druckes und damit auch der Teufe ermittelt werden. An der Basis der U-förmig in einem Bohrloch verlegten Erdwärmesonde bleibt dann die Messsonde zunächst liegen, bis die Umwälzpumpe wieder anspringt und nach oben fördert. Eine optionale Blende im aufsteigenden Ast der Erdwärmepumpe verhindert, dass die Sonde in die Pumpe gelangt und dieses dadurch Schaden nimmt.
[A4] Schließlich wird die Aufgabe durch eine Erdwärmsonde, umfassend einen Rohrleitungskreis mit einer drahtlosen Messsonde zum Messen physikalischer Größen in mindestens einem Abschnitt des Rohrleitungskreises und mit einer Umwälzpumpe zum Umwälzen eines im Rohrleitungskreis befindlichen flüssigen Mediums, wobei die Messsonde über einen Bypass an der Umwälzpump vorbeigeleitet im Kreis geführt wird, gelöst, bei der der Bypass drei miteinander mittels beweglicher in Trennwänden vorgesehener Verschlüsse schaltbar verbundene Kammern aufweist, wovon eine Vorlaufkammer von der Flüssigkeit auf der Vorlaufseite und eine Rücklaufkammer auf der Rücklaufseite des Rohrleitungssystems durchflossen wird, und zwischen diesen Kammern eine Schleusenkammer angeordnet ist, wobei die Schleusenkammer mit mindestens einer zusätzlichen verschließbaren Beschickungsöffnung und/oder Entnahmeöffnung vorgesehen ist, so dass eine Ein- und/oder Ausschleusung der Messsonde im Bypass erfolgt. Erst durch den Bypass kann sich die Messsonde durch den gesamten Rohrleitungskreis bewegen, ohne dabei in der Pumpe Schaden zu nehmen. Die Messungen der Sonde können dadurch kontinuierlich erfolgen. Der Rohrleitungskreis wird so einer kontinuierlichen Überwachung seiner ortsabhängigen Zustandsgrößen zugänglich.

Eine bevorzugte Ausführungsform der Erfindung wird beispielhaft an Hand einer Zeichnung erläutert. Die Figuren der Zeichnung zeigen im Einzelnen:
- Figur 1: ein schematisches Blockschaltbild des erfindungsgemäßen Erdwärmesonde,
- Figur 2: eine Explosionsdarstellung des Bypasses der erfindungsgemäßen Erdwärmesonde,
- Figur 3: eine Seitenansicht des Bypasses,
- Figur 4: einen Vertikalschnitt entlang Schnittlinie E-E des in Figur 3 dargestellten Bypasses,
- Figur 5: einen Horizontalschnitt entlang Schnittlinie H-H des in Figur 4 dargestellten Bypasses,
- Figur 6: einen Querschnitt entlang Schnittlinie G-G des in Figur 4 dargestellten Bypasses,
- Figur 7: einen Querschnitt entlang Schnittlinie F-F des in Figur 4 dargestellten Bypasses,
- Figur 8: einen Vertikalschnitt durch eine Messsonde und
- Figuren 9 bis 12: einen Programmablaufplan zur Durchführung kontinuierlicher Messungen.

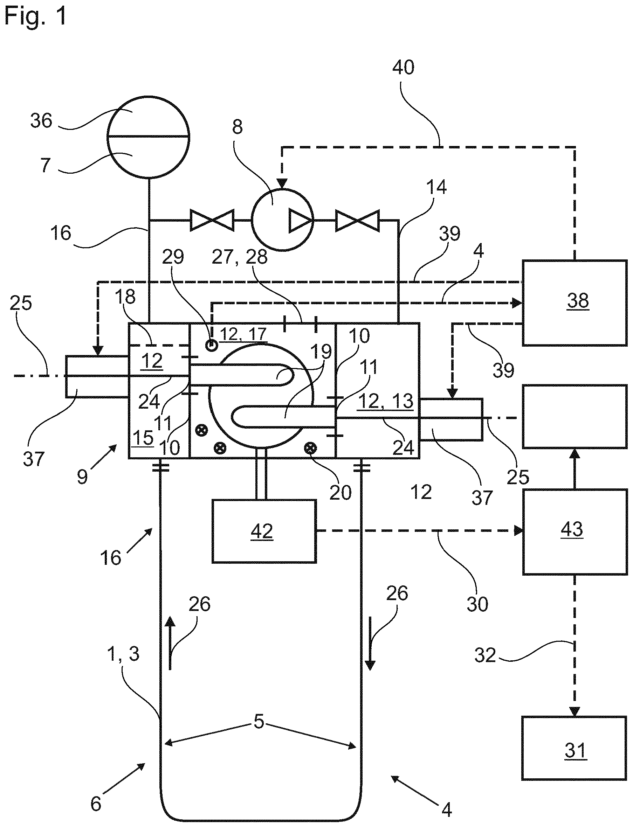

Das gesamte Messsystem ist in **Figur 1** als schematisches Blockschaltbild dargestellt. Die Erdwärmesonde 6 weist zwei vertikale Abschnitte 5 auf, die im unteren Bereich zu einer U-förmigen Rohrleitungsschleife verbunden sind. Die oberen Enden münden in den Bypass 9. Die andere Seite des Bypasses ist mit der Umwälzpumpe 8 verbunden, so dass druckseitig eine Vorlaufseite 14 und ansaugseitig eine Rücklaufseite 16 unterschieden werden kann, die mit einer Vorlaufkammer 13 bzw. einer Rücklaufkammer 15 des Bypasses verbunden sind. Auf diese Weise wird über die Kammern 13, 14 des Bypasses des Rohrleitungssystems 4 ein Kreis geschlossen, in dem durch die Umwälzpumpe 8 getrieben ein Wärmeträgermedium 7, meist eine Sole, zirkuliert. Ein Druckgefäß 36 dient dabei als Vorratsspeicher und gleicht Volumenänderungen infolge von Temperaturschwankungen des Mediums aus. Die Pfeile 26 geben die Fließrichtung des Mediums im Rohrleitungssystem 4 an.

Der Bypass 9 besteht aus drei einzelnen, benachbarten von Trennwänden 10 unterteilten Kammern 12. Die Trennwände zwischen den benachbarten Kammern 12 weisen Öffnungen auf, die durch Verschlüsse 11 willkürlich schaltbar zu öffnen oder zu schließen sind.

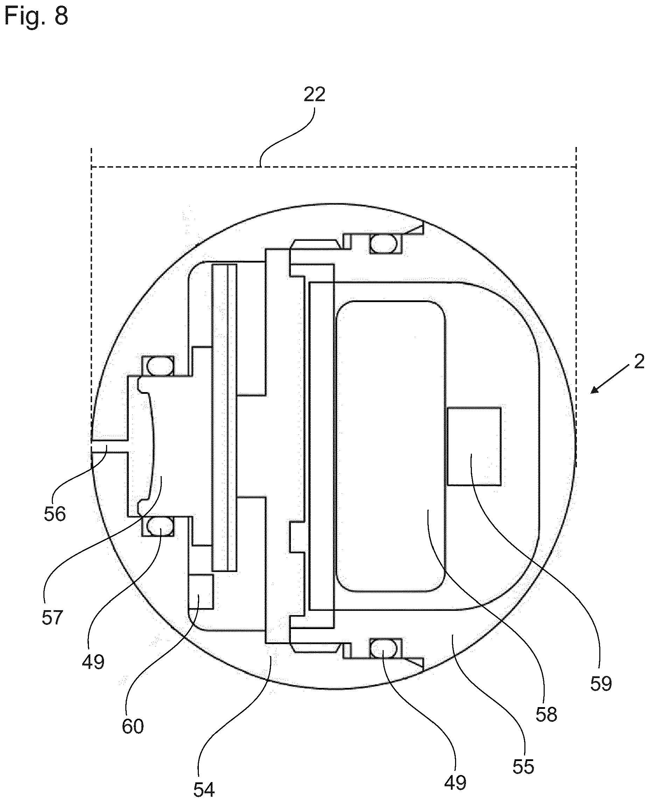

Das Medium 7 strömt folglich von der Umwälzpumpe 8 getrieben über die Vorlaufseite 14 in die Vorlaufkammer 13 ein und von dort in Pfeilrichtung 26 durch die vertikalen Abschnitte 5 der Erdwärmesonde 6, bis es auf der Rücklaufseite 16 in die Rücklaufkammer 15 eintritt und dort wieder der Saugseite der Umwälzpumpe 8 zufließt. Zwischen den Vorlaufkammer 13 und der Rücklaufkammer 15 ist eine Schleusenkammer 17 angeordnet. In die Schleusenkammer 17 kann eine nicht dargestellte Messsonde 2 (Figur 8) über die Beschickungsöffnung 27 in die Schleusenkammer 17 eingelegt werden. Zur Entnahme der Messsonde dient dieselbe Öffnung oder eine getrennte Entnahmeöffnung 28. Im Regelfall sind die Öffnungen 27, 28 verschlossen. Die in den Trennwänden 10 vorgesehenen Verschlüsse 11 sind mittels Motoren 37 entlang der Achse 25 aus der Schließlage verfahrbar um die Öffnung zwischen der Schleusenkammer 17 und der benachbarten Vorlauf- bzw. Rücklaufkammer freizugeben. Die beiden Achsen 25 der Motoren 37 sind vertikal zueinander versetzt angeordnet.

Zur Schalten der Motoren 37 dient eine Steuerung 38, die über Leitungen 39 mit den Motoren 37 verbunden sind. Zusätzlich weist die Steuerung 38 einen weiteren Ausgang auf, der es ermöglicht, über Leitung 40 auch die Umwälzpumpe 8 anzusteuern.

Ein Detektor 29 im Bypass 9 dient zur Erkennung, ob die nicht dargestellte Messsonde 2 sich in der Rücklaufkammer 15 befindet. Über die Leitung 41 ist das Signal des Detektors 29 auf einen Eingang 41 der Steuerung 38 aufgelegt.

Die Schleusenkammer 17 mit den motorisch angetriebenen Verschlüssen 11 dient zum Transport der nicht dargestellten Messsonde 2 aus der Rücklaufkammer 15 in die Vorlaufkammer 13. Von der Vorlaufkammer 13 durchläuft die Messsonde die vertikale Abschnitte 5 der Erdwärmesonde 6, bis sie nach Eintritt in die Rücklaufkammer 15 von einer dafür vorgesehenen Lochblende 18 zurückgehalten wird.

Zuvor befindet sich der Verschluss 11 der Rücklaufkammer 15 mit dem Mitnehmer 19 in der geöffneten Stellung, sodass die Messsonde vor der Blende 18 von dem Verschluss 11 und seinem Mitnehmer 19 horizontal umfangen ist. Nachdem der Detektor 29 dann die Anwesenheit der Messsonde 2 detektiert und über Leitung 41 der Steuerung 38 meldet hat, schaltet diese den Motor 37 an, sodass der Verschluss 11 mit Mitnehmer 19 und der Messsonde 2 diese in die Schleusenkammer 17 einfährt und die Sonde in diese überführt.

In dieser Lage wird die Messsonde 2 induktiv über orthogonal zueinander ausgerichtete Transponderspulen 20 aufgeladen. Diese dienen auch dazu, die während eines Umlaufs von der Sonde aufgenommenen Messwerte auszulesen. Sobald die Messsonde 2 zu einem neuen Messzyklus bereit ist, schaltet die Steuerung 38 den Motor 37 an, sodass der Verschluss 11 mit Mitnehmer 19 und Messsonde 2 die Trennwand öffnet und die Messsonde 2 in die Vorlaufkammer 13 überführt. Von dort tritt die Messsonde 2 erneut in den vertikalen Abschnitt 5 der Erdwärmesonde 6 ein.

Die Messwerte werden von der Transponderspule 20 an eine Auslese- und Ladeeinheit 42 übergeben, die dann die Werte über eine Wirkverbindung 30, die auch drahtlos verwirklicht sein kann, an eine Auswerteeinheit 43 weitergibt. In dieser Auswerteeinheit 43 werden die Daten dann durch Programme ausgewertet auf einem Display 44 angezeigt. Über eine drahtlose Verbindung 32, z.B. ein WLAN, können auch weitere Auswerte- und Anzeigeeinheiten 31 mit der Auswerteeinheit 43 in Verbindung stehen.

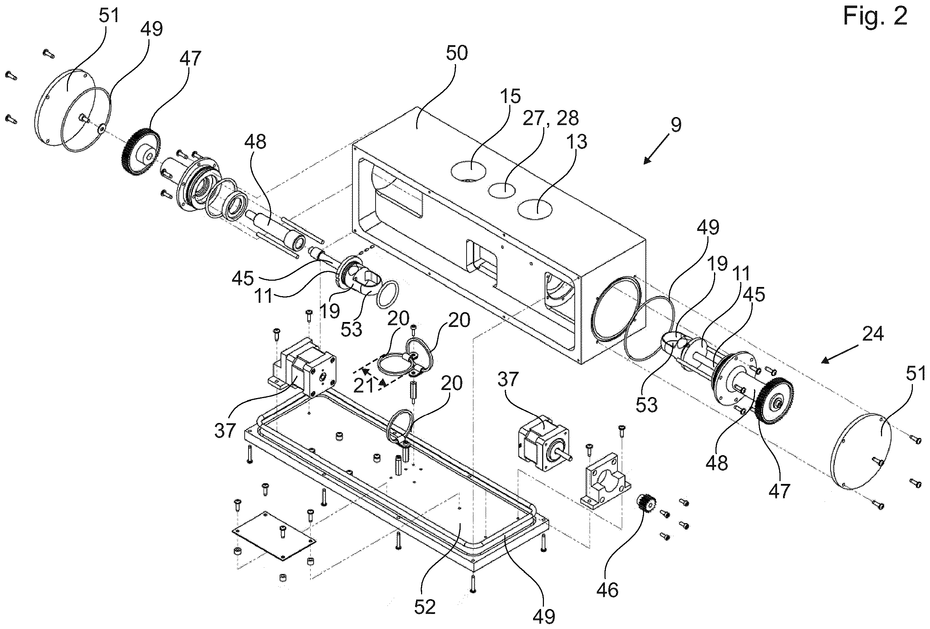

**Figur 2** zeigt eine Explosionsdarstellung des Bypasses 9 der erfindungsgemäßen Erdwärmesonde. In dieser räumlichen Darstellungsweise ist die ösenförmige Gestalt der Mitnehmer 19 an den Verschlüssen 11 besser erkennbar. Diese werden über Spindel 45 linear von dem Motor 37 bewegt. Das Drehmoment des Motors 37 wird dabei über das Ritzel 46 auf das Stirnrad 47 übertragen, das dann die Mutter 48 antreibt, sodass ein unbekannter Spindel-Mutter-Antrieb verwirklicht ist. Als Drehmomentstütze für die Mutter 48 dient dabei die Leiste 61.

Zum Auslesen der von einer Messsonde 2 aufgenommenen Messwerte dienen drei orthogonal zueinander angeordnete Transponderspulen 20. Der Durchmesser 21 der Transponderspulen 20 entspricht oder übersteigt den Durchmesser 22 der Messsonde 2.

Die genannten Teile sind in dem Bypassgehäuse 50 integriert. Zwei seitliche Deckel 51 ermöglichen es, nach Demontage dieser Zugang zu den Antrieben zu erhalten.

Die Spulen 20 sind direkt an dem rechteckigen Deckel 52 befestigt. Die Dichtungen 49 dichten das Gehäuse mit Deckeln nach außen ab.

Die Mitnehmer 19 sind direkt mit den Verschlüssen 11 verbunden und weisen eine Mitnahmeöffnung 53 auf, die groß genug ist, die Messsonde 2 in sich aufzunehmen.

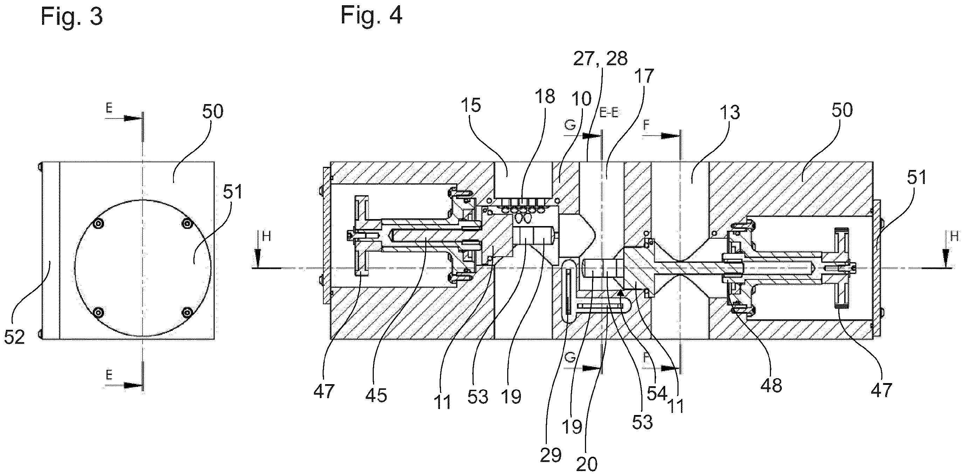

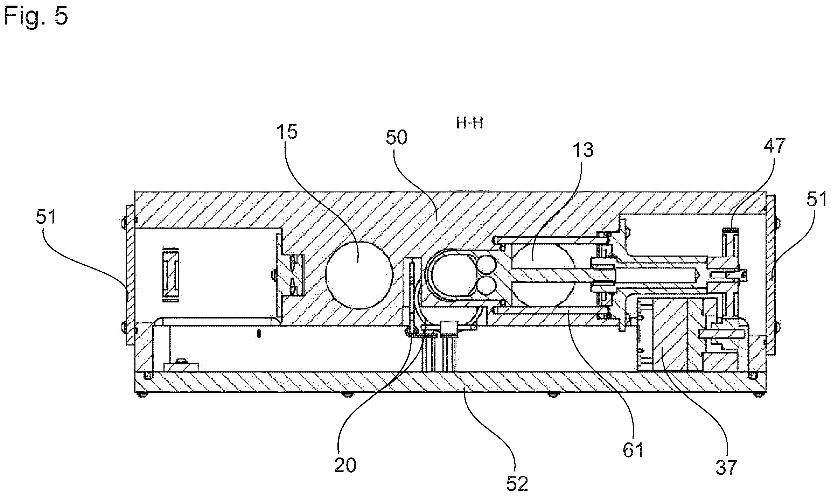

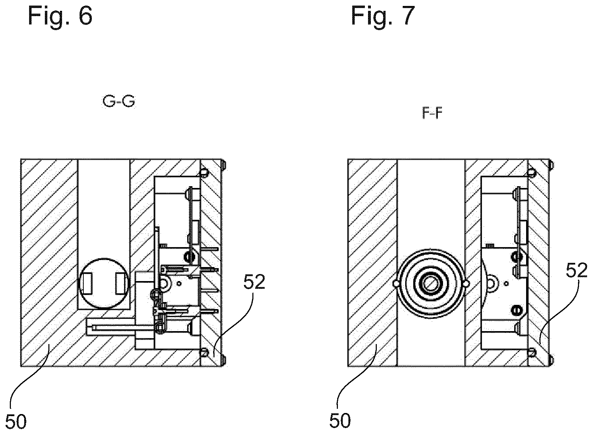

Die **Figur 3** zeigt eine Seitenansicht des Bypasses. Figuren **4 bis 7** zeigen verschiedene Schnitte des montierten Bypasses, nämlich einen Vertikalschnitt in Figur 4 und einen Horizontalschnitt in Figur 5 sowie zwei Querschnitte in den Figuren 6 und 7.

In Figur 4 sind deutlich die zylindrischen Kammern zu erkennen, nämlich rechts die Vorlaufkammer 13, links die Rücklaufkammer 15 und mittig die Schleusenkammer 17. Nach links ist die Schleusenkammer 17 zur Rücklaufkammer 15 hin geöffnet, weil der Verschluss 11 in seinen linken Sitz gefahren ist. Eine von unten in die Rücklaufkammer 15 eintretende nicht dargestellte Messsonde 2 wird von der Blende 18 zunächst aufgehalten und vom Mitnehmer 19 umgriffen. Sobald der Detektor 29 die Anwesenheit der Messsonde 2 detektiert, fährt der linke Verschluss 11 in seine rechte Endstellung und überführt dabei die Messsonde 2 in die Schleusenkammer 17. Da die Messsonde 2 eine geringere Dichte als das umgebende Medium aufweist, wird sie, von der Schwerkraft getrieben, in der Schleusenkammer 17 nach unten sinken, bis sie sich in der Mitnahmeöffnung 53 des anderen Mitnehmers 19 befindet und gegen die Stirnfläche 54 anschlägt.

Nach Öffnen eines nichtgezeichneten Deckels, der üblicherweise die Beschickungsöffnung 27 und /oder Entnahmeöffnung 28 verschließt, ist die Messsonde 2 in Schleusenkammer 17 zugänglich und kann aus ihr entnommen werden oder getauscht oder eingesetzt werden. Nach Schließen des nicht gekennzeichneten Deckels der Schleusenkammer 17 kann dann der rechte Verschluss 11 aus seiner Schließlage in die rechte Endlage gefahren werden, wobei er die Messsonde 2 mit in die Rücklaufkammer 13 überführt und die Schleusenkammer 17 zur Vorlaufkammer 13 hin öffnet. In dieser Lage sinkt dann die nicht dargestellte Messsonde nach unten und tritt für einen Messvorgang in den vertikalen Abschnitt 5 der Erdwärmesonde 6 ein.

**Figur 8** zeigt einen Querschnitt durch die Messsonde 2. Sie hat die Form einer Kugel mit dem Durchmesser 22, in Realität beträgt er ca. 20 mm. Das Gehäuse der Messsonde teilt sich in ein Metallgehäuse 54 und einen Kunststoffdeckel 55. Über eine Bohrung 56 kann ein Drucksensor 57 den anstehenden Umgebungsdruck messen. Der ebenfalls im Gehäuse 50 untergebrachte Energiespeicher 58, vorzugsweise ein Kondensator, wird mittels einer Transponderspule 59 aufgeladen. Des Weiteren dient die Transponderspule 59 auch zur Übertragung der vom Drucksensor 57 und von einem Temperatursensor 60 ermittelten Messwerte.

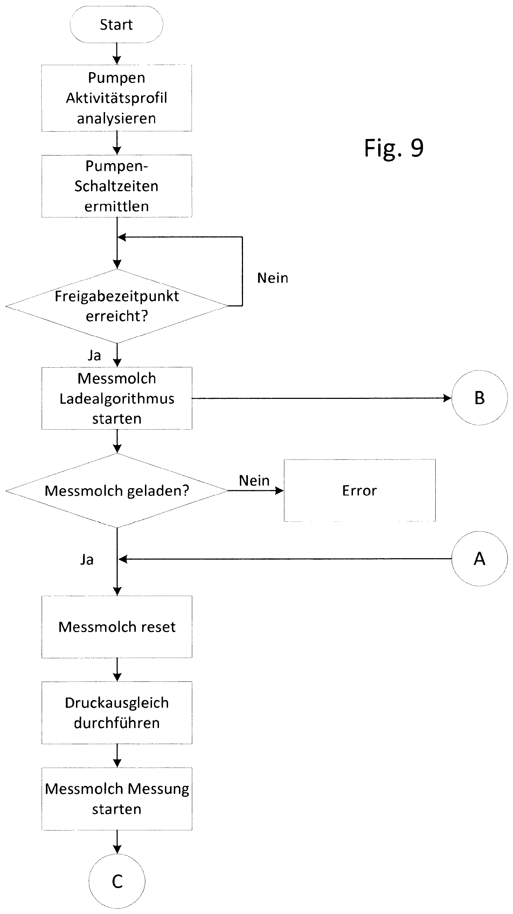

Die **Figuren 9 bis 12** zeigen den Ablauf beim Einsatz der Messsonde 2. Nach Starten des Messprogramms ermittelt die Software zunächst ein Aktivitätsprofil der Umwälzpumpe 8. Darunter ist der Rhythmus zu verstehen, in dem die Umwälzpumpe bei einer Erdwärmesonde 6 in Abhängigkeit der Wärmeentnahme betrieben wird. Sind die Schaltzeiten der Pumpe 8 ermittelt, so wird ein Freigabezeitpunkt berechnet, zu dem die Messsonde 2 in den vertikalen Abschnitt 5 einer Erdwärmesonde 6 eintreten soll. Dies entspricht der Überführung des Messmolchs, d.h. der Messsonde 2, in die Vorlaufkammer 13.

Bis zur Überführung der Messsonde 2 wird der Energiespeicher geladen. Ist der Messmolch zum Freigabezeitpunkt nicht geladen, so erfolgt eine Fehlermeldung. Nach dem Laden der Messsonde wird der Anfangszustand des Messmolchs durch einen Reset herbeigeführt. Anschließend kann bei geschlossener Schleusenkammer 17 der Messmolch in die Vorlaufkammer 13 überführt werden und die Messung gestartet werden.

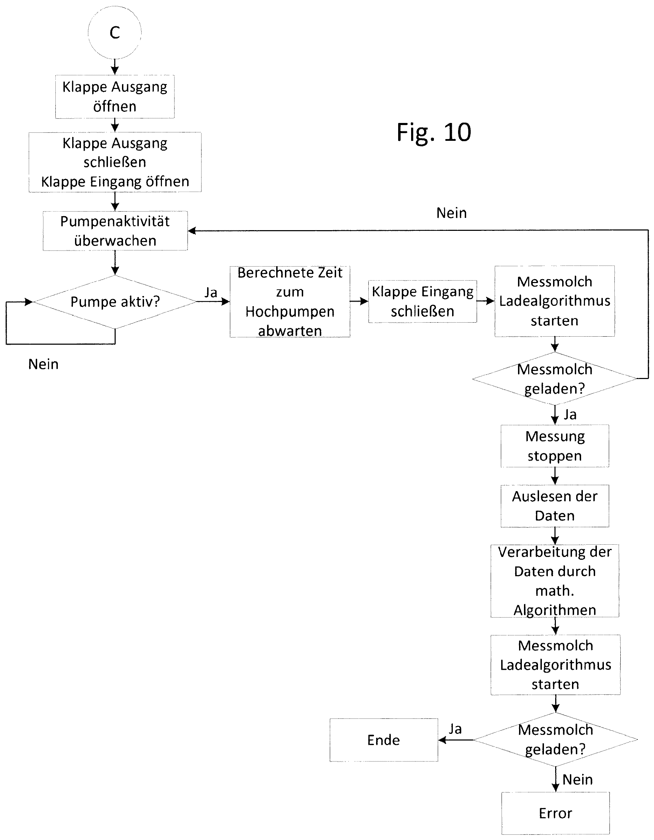

**Figur 10** zeigt den weiteren Ablauf nach Starten des Messmolchs. Dabei wird der Verschluss 11 aus seinem Sitz herausgefahren und nach rechts bewegt sodass der Messmolch aus der Schleusenkammer 17 in die Vorlaufkammer 13 überführt wird. Der Messmolch sinkt dabei in den vertikalen Abschnitt 5 der Erdwärmesonde 6 ab. Die Schleusenkammer 17 wird dann wieder verschlossen und der linke Verschluss 11 geöffnet, sodass die Öffnung nunmehr von der Schleusenkammer 17 zu der Rücklaufkammer 15 besteht. Nach Ablauf einer vorbestimmten Zeit, die die Messsonde 2 benötigt, um zum untersten Sattelpunkt der Erdwärmesonde 6 abzusinken, wird solange abgewartet, bis die Umwälzpumpe 8 in Abhängigkeit der Wärmeentnahme von der Steuerung 38 wieder eingeschaltet wird. Sobald eine zuvor berechnete Zeit zum Aufholen der Messsonde 2 ablaufen ist, und der Detektor 29 die Anwesenheit der Messsonde 2 in der Rücklaufkammer 15 bestätigt hat, wird der Verschluss 11 der Rücklaufkammer 15 wieder in seinen rechten Sitz verschoben und dabei die Messsonde 2 aus der Rücklaufkammer 15 in die Schleusenkammer 17 überführt. In der Schleusenkammer 17 wird dann erneut der Ladealgorhythmus des Messmolchs aktiviert und nach vollständigem Laden wird die Messung angehalten und die Daten ausgelesen. Anschließend verarbeitet die Auswerteeinheit 43 die Daten in gewünschter Weise. Sobald die Daten ausgelesen sind und der Messmolch geladen ist, kann entweder die Messung beendet werden oder der Messmolch wieder für den nächsten Durchgang in die Vorlaufkammer 13 überführt werden.

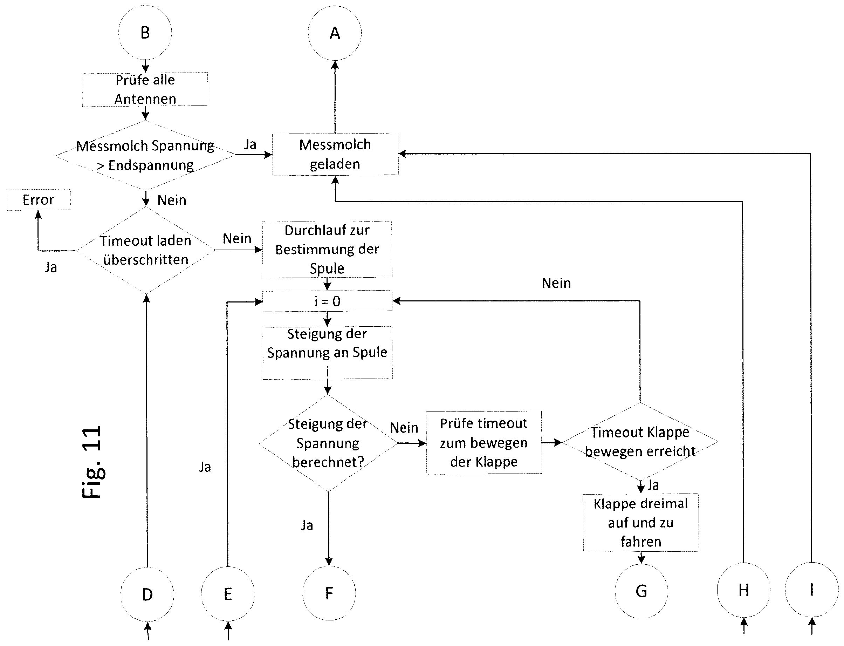

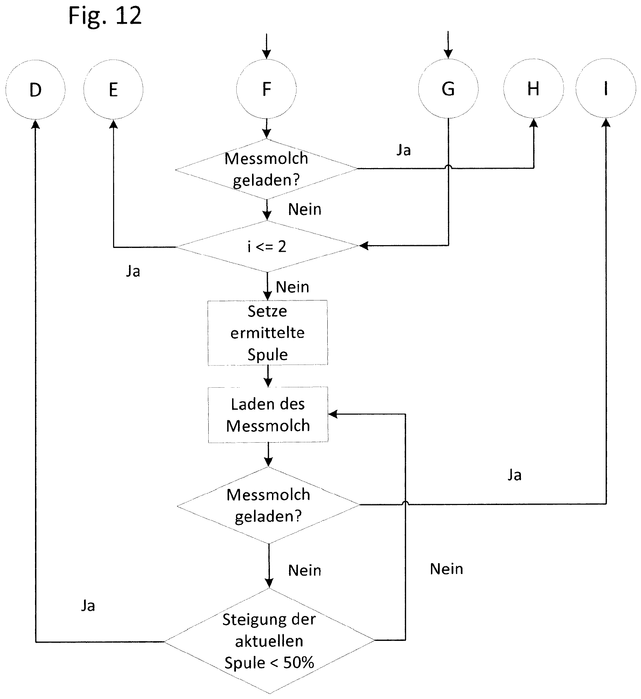

Die **Figuren 11** **und** **12** zeigen detaillierter den Verfahrensablauf zum Laden der Messsonde 2. Da die Lage der Transponderspule 59 der Messsonde 2 in der Schleusenkammer 17 zufällig ist, ist die Kopplung zwischen den orthogonal angeordneten Spulen 20 des Bypasses 9 unterschiedlich gut. Deshalb wird für jede der drei orthogonal zueinander angeordneten Spulen 20 zunächst über eine Messung diejenige Spule ermittelt, die die beste Kopplung bietet. Bei besonders ungünstiger Lage sieht der Programmablauf auch ein nochmaliges oder mehrmaliges Auf- und Zufahren des Verschlusses vor, um die Messsonde 2 und die Transponderspule 59 in eine günstigere Lage zu den Transponderspulen 20 des Bypasses zu bringen. Nach Auswahl der geeignetsten Spule für die aktuelle Lage der Messsonde 2, wird über diese Spule dann die Messsonde 2 geladen und gegebenenfalls auch die Messwerte ausgelesen.
Während wenigstens eine exemplarische Ausführungsform in der oben angegebenen Zusammenfassung und der vorangehenden ausführlichen Beschreibung dargestellt worden ist, sollte verstanden und festgehalten werden, dass eine große Anzahl von Variationen bzw. Modifikationen dazu existieren. Es sollte auch festgehalten werden, dass die exemplarische Ausführungsform oder die exemplarischen Ausführungsformen nur Beispiele sind und nicht dazu gedacht sind, den Umfang (bzw. Schutzumfang), die Anwendbarkeit oder den Aufbau der erfindungsgemäßen Einrichtung in irgendeiner Weise zu begrenzen. Vielmehr geben die Zusammenfassung und die ausführliche Beschreibung dem Fachmann eine hinreichende und leicht verständliche Anweisung zur Implementierung von wenigsten einer exemplarischen Ausführungsform. Dabei sollte verstanden werden, dass vielfältige und verschiedenartige Änderungen dieser Ausführungsform bezüglich der Funktion und der Anordnung der in einer exemplarischen Ausführungsform beschriebenen Elemente ausgeführt werden können, ohne von dem durch die beigefügten Patentansprüche und deren gesetzlichen Äquivalente definierten Umfang (bzw. Schutzumfang) abzuweichen.

### Bezugszeichenliste

- 1: Rohrleitungen
- 2: Messsonde
- 3: Abschnitt
- 4: Rohrleitungssystem
- 5: vertikaler Abschnitt
- 6: Erdwärmesonde
- 7: Medium
- 8: Umwälzpumpe
- 9: Bypass
- 10: Trennwände
- 11: Verschlüsse
- 12: Kammern
- 13: Vorlaufkammer
- 14: Vorlaufseite
- 15: Rücklaufkammer
- 16: Rücklaufseite
- 17: Schleusenkammer
- 18: Blende
- 19: Mitnehmer
- 20: Transponderspule, Bypass
- 21: Durchmesser Spule
- 22: Durchmesser Messsonde
- 23: Deckel
- 24: Spindel-Mutter-Antrieb
- 25: Achse
- 26: Fließrichtung
- 27: Beschickungsöffnung
- 28: Entnahmeöffnung
- 29: Detektor
- 30: drahtlose Verbindung
- 31: Anzeigeeinheit
- 32: WLAN, Ethernet, UMTS
- 33: Kugel
- 34: Bewegungsachse
- 35: Bewegungsachse
- 36: Druckgefäß
- 37: Motor
- 38: Steuerung
- 39: Leitung
- 40: Leitung
- 41: Eingang
- 42: Auslese- und Ladeeinheit
- 43: Auswerteeinheit
- 44: Display
- 45: Spindel
- 46: Ritzel
- 47: Stirnrad
- 48: Mutter
- 49: Dichtung
- 50: Bypassgehäuse
- 51: Deckel
- 52: Deckel rechteckig
- 53: Mitnahmeöffnung
- 54: Metallgehäuse
- 55: Kunststoffdeckel
- 56: Bohrung
- 57: Drucksensor
- 58: Energiespeicher
- 59: Transponderspule
- 60: Temperatursensor
- 61: Leiste Drehmomentstütze

## Patentansprüche

1. Verfahren zur Erfassung ortsabhängiger Zustandsgrößen in Rohrleitungen (1) mittels mindestens einer drahtlosen Messsonde (2) in mindestens einem Abschnitt (3) eines Rohrleitungssystems (4) einer Erdwärmesonde (6), wobei das im Rohrleitungssystem (4) befindliche flüssige Medium (7) mittels einer Umwälzpumpe (8) umgewälzt wird, **dadurch gekennzeichnet, dass** die mindestens eine Messsonde (2) über einen Bypass (9) an der Umwälzpumpe (8) vorbeigeleitet in einem Kreis geführt wird, und dass der Bypass (9) drei miteinander mittels beweglicher in Trennwänden (10) vorgesehener Verschlüsse (11) schaltbar verbundene Kammern (12) aufweist, wovon eine Vorlaufkammer (13) von der Flüssigkeit auf der Vorlaufseite (14) und eine Rücklaufkammer (15) auf der Rücklaufseite (16) des Rohrleitungssystems (4) durchflossen wird, und zwischen diesen Kammern (13, 15) eine Schleusenkammer (17) angeordnet ist, wobei die Schleusenkammer (17) mit mindestens einer zusätzlichen verschließbaren Beschickungsöffnung (27) und/oder Entnahmeöffnung (28) vorgesehen ist, so dass eine Ein- und/oder Ausschleusung der Messsonde (2) im Bypass (9) erfolgt.

2. Verfahren nach Anspruch 1, **dadurch gekennzeichnet, dass** die Messsonde (2) während ihres Umlaufs im Rohrleitungssystem (4) vorrübergehend angehalten wird.

3. Verfahren nach Anspruch 1 oder 2, **dadurch gekennzeichnet, dass** die Umwälzpumpe (8) für eine Messdauer vorrübergehend angehalten wird.

4. Erdwärmesonde (6) umfassend einen Rohrleitungskreis (4) mit einer drahtlosen Messsonde (2) zum Messen physikalischer Größen in mindestens einem Abschnitt (3) des Rohrleitungskreises (4) und mit einer Umwälzpumpe (8) zum Umwälzen eines im Rohrleitungskreis (4) befindlichen flüssigen Mediums, wobei die Messsonde (2) über einen Bypass (9) an der Umwälzpump (8) vorbeigeleitet in einem Kreis geführt wird, **dadurch gekennzeichnet, dass** der Bypass (9) drei miteinander mittels beweglicher in Trennwänden (10) vorgesehener Verschlüsse (11) schaltbar verbundene Kammern (12) aufweist, wovon eine Vorlaufkammer (13) von der Flüssigkeit auf der Vorlaufseite (14) und eine Rücklaufkammer (15) auf der Rücklaufseite (16) des Rohrleitungssystems (4) durchflossen wird, und zwischen diesen Kammern (13, 15) eine Schleusenkammer (17) angeordnet ist, wobei die Schleusenkammer (17) mit mindestens einer zusätzlichen verschließbaren Beschickungsöffnung (27) und/oder Entnahmeöffnung (28) vorgesehen ist, so dass eine Ein- und/oder Ausschleusung der Messsonde (2) im Bypass (9) erfolgt.

## Claims

1. Method for sensing location-dependent variables of state in pipelines (1) by means of at least one wireless measuring probe (2) in at least one section (3) of a pipeline system (4) of a geothermal probe (6), wherein the fluid medium (7) within the pipeline system (4) is circulated by means of a circulating pump (8),
**characterized in that**
the at least one measuring probe (2) is guided across a bypass (9) past the circulating pump (8) in a circuit and that the bypass (9) comprises three chambers (12) switchably connected with one another by means of movable closures (11) provided in partition walls (10), of which a forward chamber (13) conducts flow of the fluid on the forward side (14) and a return chamber (15) conducts flow on the return side (16) of the pipeline system (4), and between these chambers (13, 15) a lock chamber (17) is disposed, wherein the lock chamber (17) is provided with at least one additional closable loading opening (27) and/or unloading opening (28) such that the transfer-in and/or the transfer-out of the measuring probe (2) takes place in the bypass (9).

2. Method as in claim 1, **characterized in that** the measuring probe (2) during its circulation in the pipeline system (4) is temporarily stopped.

3. Method as in claim 1 or 2, **characterized in that** the circulating pump (8) is temporarily stopped for a measurement time.

4. Geothermal probe (6) comprising a pipeline circuit (4) with a wireless measuring probe (2) for measuring physical variables in at least one section (3) of the pipeline circuit (4) and with a circulating pump (8) for circulating a fluid medium within the pipeline circuit (4), wherein the measuring probe (2) is guided across a bypass (9) past the circulating pump (8) in a circuit, **characterized in that** the bypass (9) comprises three chambers (12) switchably connected by means of movable closures (11) provided in partition walls (10), of which a forward chamber (13) conducts flow of the fluid on the forward side (14) and a return chamber (15) conducts flow on the return side (16) of the pipeline system (4), and between these chambers (13, 15) a lock chamber (17) is disposed, wherein the lock chamber (17) is provided with at least one additional closable loading opening (27) and/or unloading opening (28) such that the transfer-in and/or transfer-out of the measuring probe (2) takes place in the bypass (9).

## Revendications

1. Procédé de détection de grandeurs d'état dépendant du lieu dans des conduites (1) au moyen d'au moins une sonde de mesure sans fil (2) dans au moins une partie (3) d'un système de conduites (4) d'une sonde géothermique (6), dans lequel le milieu liquide (7) situé dans le système de conduites (4) est amené à circuler au moyen d'une pompe de circulation (8), **caractérisé en ce que** ladite au moins une sonde de mesure (2) est guidée dans un circuit en passant devant la pompe de circulation (8) au moyen d'une dérivation (9), et **en ce que** la dérivation (9) comporte trois chambres (12) qui sont reliées entre elles de manière commutable au moyen de fermetures (11) prévues de manière mobile dans des parois de séparation (10), depuis lesquelles le liquide traverse une chambre aller (13) sur le côté aller (14) et une chambre de retour (15) sur le côté retour (16) du système de conduites (4), et une chambre à écluse (17) est disposée entre ces chambres (13, 15), dans lequel la chambre à écluse (17) est munie au moins d'une ouverture de chargement (27) et/ou d'une ouverture de retrait (28) supplémentaires pouvant être fermées, de manière à ce qu'une insertion et/ou un retrait de la sonde de mesure (2) soit effectué dans la dérivation (9).

2. Procédé selon la revendication 1, **caractérisé en ce que** la sonde de mesure (2) est temporairement arrêtée pendant sa circulation dans le système de conduites (4).

3. Procédé selon la revendication 1 ou 2, **caractérisé en ce que** la pompe de circulation (8) est temporairement arrêtée pendant une période de mesure.

4. Sonde géothermique (6) comprenant un circuit de conduites (4) muni d'une sonde de mesure sans fil (2) pour mesurer des grandeurs physiques dans au moins une partie (3) du circuit de conduites (4) et d'une pompe de circulation (8) pour faire circuler un milieu liquide situé dans le circuit de conduites (4), dans laquelle la sonde de mesure (2) est guidée dans un circuit en passant devant la pompe de circulation (8) au moyen d'une dérivation (9), **caractérisée en ce que** la dérivation (9) comprend trois chambres (12) qui sont reliées entre elles de manière commutable au moyen de fermetures (11) prévues de manière mobile dans des parois de séparation (10), depuis lesquelles le liquide traverse une chambre aller (13) sur le côté aller (14) et une chambre de retour (15) sur le côté retour (16) du système de conduites (4), et une chambre à écluse (17) est disposée entre ces chambres (13, 15), dans laquelle la chambre à écluse (17) est munie au moins d'une ouverture de chargement (27) et/ou d'une ouverture de retrait (28) supplémentaires pouvant être fermées, de manière à ce qu'une insertion et/ou un retrait de la sonde de mesure (2) soit effectué dans la dérivation (9).
